# NEUE EUROPÄISCHE PATENTSCHRIFT

(11) **EP 1 511 654 B2**
(45) Veröffentlichungstag und Bekanntmachung des Hinweises auf die Entscheidung über den Einspruch: **21.04.2010**
(45) Hinweis auf die Patenterteilung: 02.08.2006
(21) Anmeldenummer: 03757045.4
(22) Anmeldetag: 10.06.2003
(51) Int. Cl.: B60R 5/04

(54) **HÖHENVERSTELLBARER LADEBODEN EINES KRAFTFAHRZEUGS**
HEIGHT-ADJUSTABLE LOADING BASE FOR A MOTOR VEHICLE
PLATEFORME DE CHARGEMENT REGLABLE EN HAUTEUR POUR VEHICULE AUTOMOBILE

(30) Priorität: 11.06.2002 DE 10225889
(43) Veröffentlichungstag der Anmeldung: 09.03.2005
(73) Patentinhaber: Daimler AG, 70327 Stuttgart (DE)
(72) Erfinder: WEILAND, Alexander, 82008 Unterhaching (DE)
(86) Internationale Anmeldenummer: PCT/EP2003/006045
(87) Internationale Veröffentlichungsnummer: WO 2003/104035

(56) Entgegenhaltungen:
- WO-A2-01//40023
- DE-A1- 3 923 690
- GB-A- 2 111 918
- JP-A- 08- 216 791
- JP-A- 09- 039 667
- JP-A- 2000- 177 491
- JP-U- 61- 169 839
- US- - 2 479 035
- US- - 2 492 841
- US- - 3 406 999
- US- - 3 627 158
- US-A- 2 953 287
- US-A- 4 969 793
- US-A- 6 050 202
- US-B1- 6 290 277
- US-B1- 6 290 277

## Beschreibung

Die Erfindung betrifft eine Vorrichtung zur Führung eines manuell höhenverstellbaren Ladebodens eines Kraftfahrzeugs gemäß Oberbegriff des Anspruchs 1.

Aus der DE 199 06 648 A1 ist eine Vorrichtung bekannt, die zur Führung eines im Gepäckraum eines Kraftfahrzeugs vorgesehen Ladebodens dient. Die Vorrichtung umfasst zwei voneinander beabstandete, identische Führungsschienen, in denen der Ladeboden verschiebbar gelagert ist. Die Führungsschienen weisen jeweils einen schräg zu einer gedachten Horizontalen verlaufenden Schienenabschnitt auf, an dessen Ende sich ein in etwa parallel zur Horizontalen verlaufender zweiter schienenabschnitt anschließt. Aufgrund dieser Ausgestaltung der Führungsschienen ist der Ladeboden in eine untere Position und in eine höher liegende, obere Position verstellbar, um beispielsweise bei umgeklappter Sitzanordnung einen Niveauausgleich, also eine ebene Ladefläche, bestehend aus Ladeboden und rückseitiger Sitzlehne, zu schaffen. Es hat sich gezeigt, dass der Ladeboden in den Führungsschienen häufig zum Kippen beziehungsweise verkanten neigt. Um dies zu vermeiden, muss der Bediener den Ladeboden beim verstellen präzise führen, wozu er beide Hände benötigt.

Aus der US 2,953,287 geht eine Vorrichtung zur Führung einer im Ladebereich eines Fahrzeugs angeordneten Transportbox hervor, mit in horizontaler Richtung angeordneten Fühmmgsschienen, entlang derer die Transportbox verschiebbar ist, und mit um eine ortsfeste erste Achse schwenkbar gelagerten Hebelteilen, an denen die Führungsachienen um eine zweite Achse schwenkbeweglich angebracht sind. Die Transportbox ist durch eine Schwenkbewegung der Hebelteile um die erste Achse zwischen einer unteren und einer oberen Transportboxposition verstellbar.

Aus der DE 3 923 690 A1 geht ein gattungebildendes Kraftfahrzeug gemäß dem Oberbegriff des Patentanspruchs 1 hervor.

Es ist Aufgabe der Erfindung eine Vorrichtung der eingangs genannten Art zu schaffen, die eine einfache und funktionssichere Binhandbedienung des Ladebodens ermöglicht. Vorzugsweise soll die Vorrichtung einen einfachen und kostengünstigen Aufbau aufweisen.

Zur Lösung der Aufgabe wird eine Vorrichtung mit den Merkmalen des Anspruchs 1 vorgeschlagen. Diese umfasst einander gegenüberliegend angeordnete, um eine zweite Achse schwenkbare Hebelteile, an denen der Ladeboden schwenkbar gelagert ist. Die Hebelteile sind derart ausgebildet und schwenkbar gelagert, dass durch eine Schwenkbewegung der Hebelteile um die zweite Achse der Ladeboden zwischen einer unteren und einer oberen Ladebodenposition verstellbar ist. Der von Hand höhenverstellbare Ladeboden führt beim Verschwenken also eine teilkreisförmige Bewegung um die zweite Achse aus. Aufgrund dieser Ausgestaltung der Vorrichtung ist der Ladeboden in einfacher Weise präzise geführt, vorzugsweise ohne seitliches Spiel, so dass ein gleichförmiges Bewegen des Ladebodens ohne weiteres realisierbar ist. Dadurch ist einem Bediener die Möglichkeit gegeben, den Ladeboden mit Hilfe nur einer Hand in der Höhe zu verstellen. Die Vorrichtung zeichnet sich durch eine hohe Funktionasicherheit, einen hohen Bedienkomfort sowie durch einen einfachen Aufbau aus. Die Lagerung des Ladebodens mittels der schwenkbaren Hebelteile weist ferner den Vorteil auf, dass im Crashfall die entstehenden Energien durch die Lagerung aufgenommen werden, so dass der Ladeboden keine Fondinsassen gefährdet.

Bei der erfindungsgemäßen Vorrichtung ist vorgesehen, dass in der unteren Ladebodenposition die erste Achse -in Richtung der Schwerkraft gesehen- unterhalb der zweiten Achse angeordnet ist. Dabei ist die erste Achse gegenüber der zweite Achse vorzugsweise so angeordnet, dass die Hebelteile durch die auf sie wirkende Gewichtskraft des Ladebodens drehmomentbeaufschlagt sind, wobei das Drehmoment in Schwenkrichtung des Ladebodens bei dessen Verstellung von der unteren in die obere Ladebodenposition gerichtet ist. Dadurch entwickelt der Ladeboden zu Beginn des Verstellvorgangs eine Eigendynamik, die dem Bediener die Höhenverstellung erleichtert.

Die Schwenkbarkeit des Ladebodens um die erste Achse ermöglicht während der Höhenverstellung ein Hochklappen/Hochstellen des Ladebodens, so dass der Bediener individuell bestimmen kann, mit welcher Schrägstellung er den Ladeboden verstellen möchte.

Gemäß der Erfindung ist vorgesehen, dass der Ladeboden die Bodenfläche des Gepäckraums des Kraftfahrzeugs bildet und sowohl in der unteren als auch in der oberen Ladebodenposition um die erste Achse schwenkbar ist. Vorteilhaft hierbei ist, dass dadurch der Raum unterhalb des Ladebodens zugänglich ist, so dass bei in oberer Position angeordnetem Ladeboden darin Gegenstände untergebracht werden können. Darüber hinaus ist auch bei in unterer Position angeordnetem Ladeboden die zugänglichkeit in dem darunter liegenden Bereich, in dem beispielsweise ein Ersatzrad, Werkzeuge oder sonstige Ausstattungsteile des Kraftfahrzeugs untergebracht sind, gegeben.

In besonders bevorzugter Ausführungsform der vorrichtung ist der Ladeboden einseitig gelagert, das heißt, die Hebelteile sind während des Verstellvorgangs die einzigen Lagerstellen des Ladebodens, der somit nur am Kraftfahrzeugrohbau gelagert ist. Dadurch wird erreicht, dass der Ladeboden unabhängig von beispielsweise der Stellung der vorzugsweise umklappbaren Rückenlehne der Rücksitzbank in der Höhe verstellt werden kann.

In bevorzugter Ausführungsform verlaufen die in einem Abstand voneinander angeordneten ersten und zweiten Achsen parallel zueinander und quer oder im Wesentlichen quer zur Fahrzeuglängsachse, wodurch eine gute Handhabbarkeit des Ladebodens sichergestellt wird.

Weiterhin wird ein Ausführungsbeispiel der Vorrichtung bevorzugt, das sich dadurch auszeichnet, dass in der oberen Ladebodenposition die erste Achse -in Richtung der Schwerkraft gesehen- oberhalb der zweiten Achse angeordnet ist und zwar derart, dass die über den Ladeboden auf die Hebelteile übertragenen resultierenden Kräfte im Wesentlichen in Richtung der Lagermitte der Hebelteile gerichtet sind. Dadurch wird erreicht, dass die Hebelteile in der oberen Ladebodenposition durch das Eigengewicht des Ladebodens und gegebenenfalls darauf abgestellten Lasten nicht drehmomentbeaufechlagt sind. Die Gewichtskräfte werden also vollständig beziehungsweise im Wesentlichen vollständig in die Lagerung der Hebelteile eingeleitet.

Bevorzugt wird auch ein Ausführungsbeispiel der Vorrichtung, bei dem eine Einrichtung zur Begrenzung des Schwenkwinkels der Hebelteile vorgesehen ist, die verhindert, dass der Ladeboden um die zweite Achse überdreht wird und die vorzugsweise zudem die Endstellungen der Hebelteile bei in oberer und/oder unterer Position angeordnetem Ladeboden festlegt.

Weiterhin wird ein Ausführungsbeispiel der Vorrichtung bevorzugt, bei dem zur schwenkbeweglichen Lagerung des Ladebodens an den Hebelteilen jeweils ein in einer Lagerbohrung angeordneter Lagerzapfen vorgesehen ist. Die vorzugsweise in Richtung der ersten Achse federnd gelagerten Lagerzapfen sind beispielsweise am Ladeboden angeordnet. Anstelle der Lagerzapfen kann zum Zwecke der Versteifung des Ladebodens beziehungsweise des Hebelmechanismus und um ein Verkippen des Ladebodens zu verhindern eine starre, durchlaufende Querstrebe (Lagerachse) vorgesehen sein, deren freie Enden in den Lagerbohrungen angeordnet sind. Die Querstrebe weist vorzugsweise einen kreisförmigen, insbesondere kreisrunden Querschnitt auf, um eine gute Schwenkbarkeit des Ladebodens sicherzustellen.

Bei einer vorteilhaften Ausfahrungsvariante ist vorgesehen, dass die Lagerung der starren Querstrebe auf den Hebelteilen dergestalt ist, dass Fertigungs- und/oder Lagertoleranzen in Fahr-zeugquer- und -längsrichtung und senkrecht zur Fahrzeuglängsachse ausgeglichen werden. Hierzu ist die starre Querstrebe an ihrem einen Ende mittels einer Radiallagerung und an ihrem anderen Ende mittels einer Axiallagerung (z. B. Kugellager) gelagert.

Bei einem weiteren Ausführungsbeispiel der Vorrichtung ist der Ladeboden in der unteren und der oberen Ladebodenposition mittels einer Arretiereinrichtung fixierbar. Die Betätigung der Arretiereinrichtung kann beispielsweise durch einen Eingriff des Bedieners in eine im Ladeboden vorgesehene Griffmulde erfolgen. Andere Ausführungsvarianten sind möglich.

Schließlich wird ein Ausführungsbeispiel der Vorrichtung bevorzugt, das sich dadurch auszeichnet, dass zur Überwindung einer Totpunktlage der Hebelteile mindestens eines der Hebelteile federkraftbeaufschlagt ist. Das mindestens eine Federelement drückt beziehungsweise zieht die Hebelteile aus der Totpunktlage, in der eine Selbsthemmung des Hebelmechanismus auftreten kann, heraus. Hierdurch wird der Verstellkomfort des Ladebodens weiter verbessert. Die Totpunktlage der Hebelteile ist abhängig von der Größe des Bedieners und des damit resultierenden Anstellwinkels des Ladebodens gegenüber der Horizontalen. Die Totpunktlage ist üblicherweise nicht auf eine ganz bestimmte Stellung des Ladebodens beschränkt, sondern erstreckt sich über einen Winkelbereich. Alternativ oder zusätzlich kann mit Hilfe des mindestens einen Federelements wenigstens eines der Hebelteile aus einer undefinierten, zwischen der unteren und der oberen Ladebodenposition liegenden Lage in eine vorgegebene, vorzugsweise in die untere Endlagenposition gezogen oder gedrückt werden.

Weitere vorteilhafte Ausführungsbeispiele der Vorrichtung ergeben sich aus Kombinationen der in den Unteransprüchen genannten Merkmale.

Die Erfindung wird im Folgenden anhand der Zeichnung näher erläutert. Es zeigen:
- Fig. 1: eine Prinzipskizze eines Ausführungsbeispiels der erfindungsgemäßen Vorrichtung,
- Fig. 2: eine Draufsicht auf ein erstes Ausführungsbeispiel eines Hebelteils zur Lagerung eines Ladebodens und
- Fig. 3: eine Draufsicht auf ein zweites Ausführungsbeispiel des Hebelteils.

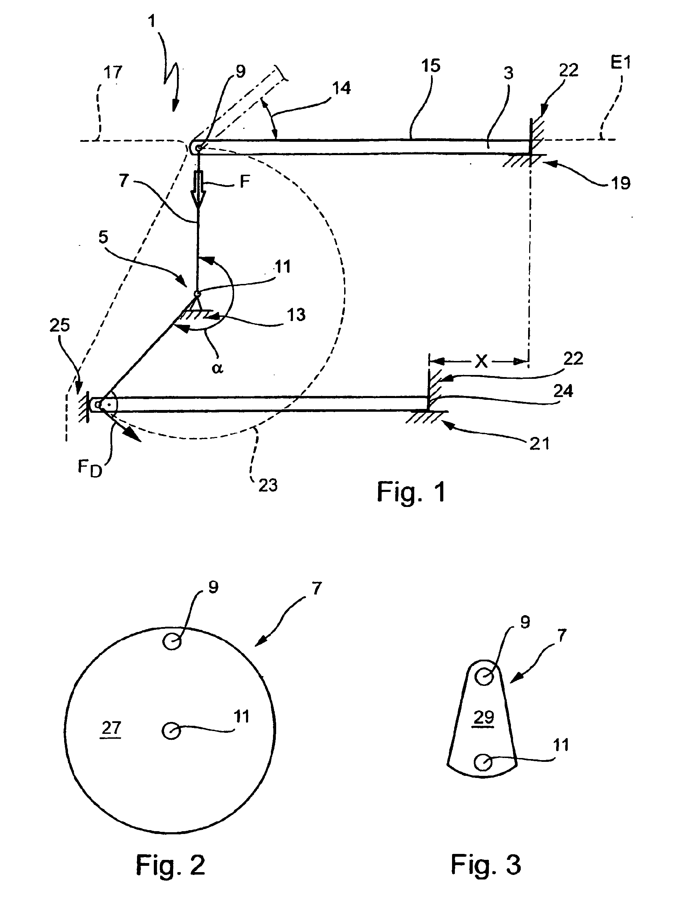

Figur 1 zeigt eine Prinzipskizze eines Ausführungsbeispiels einer Vorrichtung 1 zur Führung eines plattenförmigen oder als Rollo ausgebildeten Ladebodens 3 eines nicht dargestellten Kraftfahrzeugs. Der üblicherweise im Gepäckraum angeordnete Ladeboden 3 ist in seiner Höhe relativ zum Fahrzeugboden verstellbar. Hierdurch wird bei umgeklappter, nicht dargestellter Rückenlehne des Rücksitzes ein Niveauausgleich ermöglicht, so dass sich eine insgesamt ebene Ladefläche, gebildet aus der Ladebodenfläche und der Rückseite der umgeklappten Rückenlehne, ergibt.

Zur Führung des Ladebodens 3 sind seitlich im Gepäckraum einander gegenüberliegend angeordnete Lagerstellen vorgesehen, von denen in Figur 1 lediglich die Lagerstelle 5 dargestellt ist. Bei diesem Ausführungsbeispiel wird davon ausgegangen, dass die Lagerstellen identisch ausgebildet sind, so dass deren Aufbau und Funktion im Folgenden anhand der Lagerstelle 5 näher erläutert wird.

Der Ladeboden 3 ist an Hebelteilen 7 um eine erste, senkrecht zur Bildebene der Figur 1 verlaufende Achse 9 schwenkbar gelagert. Hierzu weisen die Hebelteile 7 jeweils eine Lagerbohrung auf, in denen mit dem Ladeboden 3 verbundene Lagerzapfen angeordnet sind. Die Hebelteile 7 sind ihrerseits um eine zweite Achse 11 schwenkbar gelagert, wobei die senkrecht zur Bildebene der Figur 1 und parallel beziehungsweise im Wesentlichen parallel zur ersten Achse 9 verlaufende zweite Achse 11 gegenüber dem nur angedeuteten Fahrzeugrohbau 13 ortsfest ist. Die schwenkbare Lagerung der Hebelteile 7 kann hier beispielsweise auch als Zapfen-Loch-Verbindung ausgebildet ein, wie die Lagerung des Ladebodens 3 an den Hebelteilen 7. Festzuhalten bleibt, dass der Ladeboden 3 bei diesem Ausführungsbeispiel nur an den vorstehend beschriebenen Lagerstellen gelagert ist, das heißt, der Ladeboden 3 wird bei seiner Verstellung zwischen der oberen und der unteren Position ausschließlich rotatorisch verlagert, während im Gegensatz dazu der Ladeboden bei bekannten Vorrichtungen translatorisch verlagert wird, um eine Höhenverstellung vorzunehmen. Die Schwenkbarkeit des Ladebodens 3 um die erste Achse 9 dient unter anderem dazu, dass er gegenüber einer gedachten Horizontalen schräg gestellt werden kann, wie in Figur 1 mit einem Doppelpfeil 14 angedeutet, was den Bedienkomfort verbessert.

Der Ladeboden 3 ist in Figur 1 in zwei Positionen dargestellt, nämlich in einer oberen Position (Gebrauchsstellung), in der seine obere Flachseite 15 in der gleichen gedachten Ebene E1 liegt, wie die Oberseite einer zwischen dem Rücksitz und dem Ladeboden 3 angeordneten, lediglich gestrichelt dargestellten Abdeckung 17 und der Rückseite der umgeklappten, nicht dargestellten Rückenlehne, und einer unteren Position (Nichtgebrauchsstellung), in der sich die Flachseite 15 des Ladebodens 3 unterhalb der Rückenlehne befindet. Der Ladeboden 3 ist vorzugsweise in der Gebrauchsstellung und der Nichtgebrauchsstellung im Wesentlichen horizontal ausgerichtet.

Der Ladeboden 3 liegt in der oberen Position auf seiner der ersten Achse 9 gegenüberliegenden Seite auf einer rohbauseitig ortsfesten ersten Ablagefläche 19 frei auf, die den Ladeboden 3 von unten abstützt. Des weiteren ist unterhalb eine zweite Ablagefläche 21 vorgesehen, die den Ladeboden 3 in seiner unteren Position abstützt. Um ein Verrutschen des auf der Ablagefläche 19 beziehungsweise 21 abgestützten Ladebodens 3
- gemäß der Darstellung der Figur 1- nach rechts zu verhindern, ist jeweils ein lediglich angedeuteter Anschlag 22 vorgesehen, der beispielsweise von einer Ladekante der Fahrzeugkarosserie gebildet sein kann. Das Verrutschen des auf der Ablagefläche 19 beziehungsweise 21 abgestützten Ladebodens 3
- gemäß der Darstellung der Figur 1- nach links wird mittels einer Einrichtung 25 verhindert, auf die nachfolgend noch näher eingegangen wird.

Aufgrund des gleichbleibenden Abstands zwischen den ersten und zweiten Achsen 9, 11 führt der Ladeboden 3 bei seiner Verstellung zwischen der unteren und der oberen Position eine teilkreisförmige Bewegung aus, wie mit gestrichelter Linie 23 angedeutet. Der Schwenkwinkelbereich α beträgt hier circa 220° und kann bei einem anderen, nicht dargestellten Ausführungsbeispiel selbstverständlich auch größer oder kleiner sein.

Aus Figur 1 ist ersichtlich, dass bei in die obere Position verschwenktem Ladeboden 3 die erste Achse 9 oberhalb der zweiten Achse 11 angeordnet ist und die Hebelteile 7 parallel zu einer gedachten Vertikalen verlaufen, so dass die Gewichtskraft des Ladebodens 3 und die von gegebenenfalls auf dessen Flachseite 15 abgestellten Gegenständen in die Mitte der Lagerstelle 5, durch die die zweite Achse 11 verläuft, eingeleitet werden, wie mit einem Pfeil F angedeutet. Sobald der Ladeboden 3 um wenige Grade im Uhrzeigersinn in Richtung seiner unteren Position verschwenkt wird, führt dessen Gewichtskraft zu einer Beaufschlagung der Hebelteile 7 mit einem Drehmoment, wodurch das Verschwenken des Ladebodens 3 für den Bediener erleichtert wird.

In der unteren Ladebodenposition ist die erste Achse 9 unterhalb und links von der zweiten Achse 11 angeordnet, so dass die Hebelteile 7 durch das Gewicht des Ladebodens 3 mit einer Kraft F_{D} beaufschlagt werden, die zu einem selbsttätigen Verschwenken der Hebelteile 7 entgegen dem Uhrzeigersinn führt. Auch hier wird die Gewichtskraft des Ladebodens 3 zur Verlagerung desselben genutzt, um einem Bediener die Höhenverstellung des Ladebodens 3 zu erleichtern.

Aus Figur 1 ist ferner ersichtlich, dass die Vorderkante 24 des Ladebodens 3 in der unteren Position um den Abstand X in Richtung der zweiten Achse 11 zurückversetzt ist, also nicht auf gleicher Höhe ist wie in der oberen Position. Der Abstand X wird durch den Schwenkwinkelbereich der Hebelteile 7 und deren Anordnung bei in oberer und unterer Position angeordnetem Ladeboden 3 bestimmt und ist somit einstellbar.

Um den Schwenkwinkelbereich der Hebelteile 7 zu begrenzen, damit diese nicht überdreht werden beziehungsweise um die untere und/oder obere Ladebodenposition festzulegen, ist die Einrichtung 25 vorgesehen, die hier von einem Anschlag gebildet ist. An diesen wird der Ladeboden 3 bei dessen Verstellung in die untere Position angelegt. Die Einrichtung 25 kann beispielsweise auch dergestalt sein, dass wenigstens eines der Hebelteile 7 gegen einen Anschlag verlagert wird.

Zusammenfassend bleibt festzuhalten, dass der Ladeboden 3 nur an den Lagerstellen 5 angelenkt ist und somit unabhängig von beispielsweise der Stellung der Rücksitzrücklehne oder anderen Ausstattungsteilen des Kraftfahrzeugs zwischen der oberen und der unteren Position verschwenkbar ist. Da der Ladeboden 3 nur rotatorisch verlagert wird, kann ein einfacher und kostengünstiger Aufbau der Vorrichtung 1 realisiert werden.

Figur 2 zeigt ein Ausführungsbeispiel eines der Hebelteile 7, das als Drehscheibe 27 ausgebildet ist, das heißt das Hebelteil 7 ist scheibenförmig ausgebildet und weist hier eine kreisrunde Form auf. Die erste Achse 9, um die der Ladeboden 3 relativ gegenüber den Hebelteilen 7 verschwenkbar ist, befindet sich in einem radialen Abstand zur zweiten Achse 11, um die die Hebelteile 7 schwenkbar sind.

Figur 3 zeigt ein weiteres Ausführungsbeispiel eines der Hebelteile 7, das als Schwenkhebel 29 ausgebildet ist. Für diesen muss gegenüber der Drehscheibe ein kleinerer Bauraum bereitgestellt werden. Zudem weist er ein kleineres Volumen und somit bei gleichem Material ein geringeres Gewicht auf.

Es können auf beiden Seiten des Ladebodens 3 gleiche Hebelteile 7 vorgesehen sein. Möglich ist auch, dass auf der einen Seite des Ladebodens 3 als Hebelteil 7 beispielsweise eine Drehscheibe und auf der anderen Seite ein Schwenkhebel vorgesehen ist.

Bei dem anhand der Figuren beschriebenen Ausführungsbeispiel der Vorrichtung 1 ist der Ladeboden 3 lediglich in zwei unterschiedliche Höhenstellungen verschwenkbar. Es ist ohne weiteres möglich die Vorrichtung 1 auch so auszubilden, dass sie die Verstellung des Ladebodens 3 auch in mehr als zwei Positionen ermöglicht.

## Patentansprüche

1. Kraftfahrzeug mit einem Ladeboden, der
manuell höhenverstellbar und um eine erste Achse (9) schwenkbar ist, mit einer Vorrichtung (1) zur Führung mit einander gegenüberliegend angeordneten, um eine zweite Achse (11) schwenkbaren Hebelteilen (7), an denen der Ladeboden (3) schwenkbar gelagert ist, wobei durch eine Schwenkbewegung der Hebelteile (7) der Ladeboden (3) zwischen einer unteren und einer oberen Ladebodenposition verstellbar ist, wobei in der unteren Ladebodenposition die erste Achse (9) -in Richtung der Schwerkraft gesehen- unterhalb der zweiten Achse (11) angeordnet ist,
**dadurch gekennzeichnet, dass**
der Ladeboden (3) die Bodenfläche eines Gepäckraums des Kraftfahrzeugs bildet und in seiner oberen Position auf einer seiner ersten Achse (9) gegenüberliegenden Seite rohbauseitig ortsfesten ersten Ablagefläche (19) frei aufliegt, die den Ladeboden von unten abstützt, und eine zweite Ablagefläche (21) den Ladeboden (3) in seiner unteren Position abstützt.

2. Kraftfahrzeug nach Anspruch 1,
**dadurch gekennzeichnet, dass,**
jeweils ein Anschlag (22) vorgesehen ist, um ein Verrutschen des auf der Ablagefläche (19) bzw. (21) abgestützten Ladebodens (3) zu verhindern.

3. Kraftfahrzeug nach Anspruch 2
**dadurch gekennzeichnet, dass,**
der Anschlag (22) von einer Ladekante der Fahrzeugkarosserie gebildet ist.

4. Kraftfahrzeug nach Anspruch 1,
**dadurch gekennzeichnet, dass**
die ersten und zweiten Achsen (9,11) parallel zueinander verlaufen und in der oberen Ladebodenposition die erste Achse (9) -in Richtung der Schwerkraft gesehen- oberhalb der zweiten Achse (11) angeordnet ist.

5. Kraftfahrzeug nach einem der Ansprüche 1 bis 4,
**dadurch gekennzeichnet, dass**
die zweite Achse (11) gegenüber dem Rohbau des Kraftfahrzeugs ortsfest angeordnet ist.

6. Kraftfahrzeug nach Anspruch 4,
**dadurch gekennzeichnet, dass**
in der oberen Ladebodenposition die erste Achse (9) gegenüber der zweiten Achse (11) so angeordnet ist, dass die über den Ladeboden (3) auf die Hebelteile (7) übertragenen resultierenden Kräfte im Wesentlichen in Richtung der Lagermitte der Hebelteile (7) gerichtet sind.

7. Kraftfahrzeug nach Anspruch 1,
**dadurch gekennzeichnet, dass**
in der unteren Ladebodenposition die erste Achse (9) gegenüber der zweite Achse (11) so angeordnet ist, dass die Hebelteile (7) durch die auf sie wirkende Gewichtskraft des Ladebodens (3) drehmomentbeaufschlagt sind.

8. Kraftfahrzeug nach Anspruch 7,
**dadurch gekennzeichnet, dass**
das Drehmoment in Schwenkrichtung des Ladebodens (3) bei dessen Verstellung von der unteren in die obere Ladebodenposition gerichtet ist.

9. Kraftfahrzeug nach einem der Ansprüche 1 bis 8,
**gekennzeichnet durch**
eine Einrichtung (25) zur Begrenzung des Schwenkwinkels (α) der Hebelteile (7).

10. Kraftfahrzeug nach einem der Ansprüche 1 bis 9,
**dadurch gekennzeichnet, dass**
zur schwenkbeweglichen Lagerung des Ladebodens (3) an den Hebelteilen (7) jeweils ein in einer Lagerbohrung angeordneter Lagerzapfen vorgesehen ist.

11. Kraftfahrzeug nach Anspruch 10,
**dadurch gekennzeichnet, dass**
zum Zwecke der Versteifung des Ladebodens (3) beziehungsweise des Hebelmechanismus anstelle der Lagerzapfen eine starre Lagerachse vorgesehen ist.

12. Kraftfahrzeug nach einem der Ansprüche 1 bis 11,
**dadurch gekennzeichnet, dass**
der Ladeboden (3) in der unteren und der oberen Ladebodenposition mittels einer Arretiereinrichtung fixierbar ist.

13. Kraftfahrzeug nach einem der Ansprüche 1 bis 12,
**dadurch gekennzeichnet, dass**
zur Überwindung einer Totpunktlage der Hebelteile (7) und/oder zur Verlagerung der Hebelteile (7) in eine Endlagenposition mindestens eines der Hebelteile (7) federkraftbeaufschlagt ist.

14. Kraftfahrzeug nach einem der Ansprüche 1 bis 13,
**dadurch gekennzeichnet, dass**
die Hebelteile (7) als Drehscheiben (27) oder Schwenkhebel (29) ausgebildet sind.

## Claims

1. Motor vehicle with a loading floor whose height can be adjusted manually and which can pivot about a first axis (9), with a device (1) for guiding lever elements (7) arranged opposite one another that can pivot about a second axis (11), on which the loading floor (3) is mounted so as to be able to pivot in such manner that by a pivoting movement of the lever elements (7) the loading floor (3) can be adjusted between a lower and an upper loading floor position, such that in the lower loading floor position the fist axis (9) - as viewed in the direction of the gravitational force - is positioned under the second axis (11),
**characterised in that**
the loading floor (3) forms the floor surface of a baggage space of the motor vehicle and in its upper position it rests freely on a first supporting surface (19) whose position is fixed relative to the vehicle body shell on a side opposite to its first axis (9), which supports the loading floor from below, while a second supporting surface (21) supports the loading floor (3) in its lower position.

2. Motor vehicle according to Claim 1,
**characterised in that**
in each case a stop (22) is provided in order to prevent the loading floor (3) supported on the supporting surface (19) or (21) from sliding.

3. Motor vehicle according to Claim 2,
**characterised in that**
the stop (22) is formed by a loading edge of the vehicle body.

4. Motor vehicle according to Claim 1,
**characterised in that**
the first and second axes (9, 11) are parallel to one another and in the upper loading floor position the first axis (9) - as viewed in the direction of the gravitational force - is positioned above the second axis (11).

5. Motor vehicle according to any of Claims 1 to 4,
**characterised in that**
the second axis (11) is in a fixed position relative to the body shell of the motor vehicle.

6. Motor vehicle according to Claim 4,
**characterised in that**
in the upper loading floor position the first axis (9) is arranged relative to the second axis (11) in such manner that the resultant forces transferred by the loading floor (3) to the lever elements (7) are directed substantially towards the bearing centre of the lever elements (7).

7. Motor vehicle according to Claim 1,
**characterised in that**
in the lower loading floor position the first axis (9) is positioned relative to the second axis (11) in such manner that a torque is applied to the lever elements (7) by the weight of the loading floor (3) acting upon them.

8. Motor vehicle according to Claim 7,
**characterised in that**
the said torque is directed in the direction in which the loading floor (3) pivots when it is moved from the lower to the upper loading floor position.

9. Motor vehicle according to any of Claims 1 to 8,
**characterised in that**
it comprises a mechanism (25) for restricting the pivoting angle (α) of the lever elements (7).

10. Motor vehicle according to any of Claims 1 to 9,
**characterised in that**
to enable the loading floor (3) to be mounted so that it can pivot on the lever elements (7), in each case a bearing pin arranged in a bearing bore is provided.

11. Motor vehicle according to Claim 10,
**characterised in that**
to stiffen the loading floor (3) and the lever mechanism, a rigid bearing spindle is provided instead of the bearing pins.

12. Motor vehicle according to any of Claims 1 to 11,
**characterised in that**
the loading floor (3) can be fixed in its lower and upper loading floor positions by means of a locking mechanism.

13. Motor vehicle according to any of Claims 1 to 12,
**characterised in that**
to move through a dead-point position of the lever elements (7) and/or to enable them to move to an end position, at least one of the lever elements (7) is springloaded.

14. Motor vehicle according to any of Claims 1 to 13,
**characterised in that**
The lever elements (7) are in the form of rotating discs (27) or pivoting levers (29).

## Revendications

1. Véhicule automobile équipé d'une plateforme de chargement, réglable en hauteur manuellement, pouvant pivoter autour d'un premier axe (9), doté d'un dispositif de guidage (1) avec de leviers (7) se faisant face et pouvant pivoter autour d'un deuxième axe(11), sur lesquels la plateforme de chargement (3) est logée de façon à pouvoir pivoter, un mouvement de pivotement des leviers (7) permettant de régler la plateforme de chargement (3) entre une position de plateforme supérieure et une position de la plateforme inférieure, ce faisant dans la position de la plateforme inférieure, le premier axe (9) - vu dans le sens de la force de gravité - est disposé au dessous du deuxième axe (11), **caractérisé par le fait que** la plateforme de chargement (3) constitue le plancher du coffre du véhicule automobile et que la plateforme de chargement loge librement dans sa position supérieure coté face à son première axe (9) sur une première plage arrière, fixée par le constructeur (19), et qu'une deuxième plage arrière (21) soutient la plateforme de chargement (3) dans sa position inférieure.

2. Véhicule automobile conforme à la spécification 1, **caractérisé par le fait qu'**une butée (22) est prévue respectivement, pour éviter un glissement de la plateforme de chargement (3) posée sur la première plage arrière (19), ou soutenue sur la deuxième plage arrière (21).

3. Véhicule automobile conforme à la spécification 2, **caractérisé par le fait que** la butée (22) est constituée par le seuil de chargement de la carrosserie du véhicule.

4. Véhicule automobile conforme à la spécification 1, **caractérisé par le fait, que** les premiers et deuxièmes axes (9,11) s'étendent parallèlement l'un par rapport à l'autre et que dans une position supérieure de la plateforme, le premier axe (9) - vu dans le sens de la force de gravité - est disposé au dessus du deuxième axe (11).

5. Véhicule automobile conforme à l'une quelconque des spécifications 1 à 4, **caractérisé par le fait que** le deuxième axe (11) est disposé de façon fixe par rapport à la carrosserie du véhicule.

6. Véhicule automobile conforme à la spécification 4, **caractérisé par le fait que** dans la position de plateforme supérieure, le premier axe (9) est disposé par rapport au deuxième axe (11) de telle manière, que les forces résultantes transmises par la plateforme (3) sur les leviers (7) sont orientées essentiellement dans le sens du centre d'appui des leviers (7).

7. Véhicule automobile conforme à la spécification 1, **caractérisé par le fait que** dans la position de la plateforme inférieure, le premier axe (9) est disposé par rapport au deuxième axe (11) de telle manière, que les leviers (7) sont soumis à un couple de rotation par la force de gravité de la plateforme de chargement (3) agissant sur eux.

8. Véhicule automobile conforme à la spécification 7, **caractérisé par le fait que** le couple de rotation est orienté dans le sens de pivotement de la plateforme de chargement (3) lors de son réglage de la position inférieure vers la position supérieure.

9. Véhicule automobile conforme à l'une quelconque des spécifications 1 à 8, **caractérisé par** un dispositif (25) de limitation de l'angle de pivotement (α) des leviers (7).

10. Véhicule automobile conforme à l'une quelconque des spécifications 1 à 9, **caractérisé par le fait qu'**un tourillon disposé dans un alésage de palier est prévu respectivement pour le logement pivotant de la plateforme (3) sur chacun des leviers (7).

11. Véhicule automobile conforme à la spécification 10, **caractérisé par le fait que** pour le renforcement de la plateforme (3) ou bien du mécanisme à leviers, un axe de palier rigide est prévu à la place du tourillon.

12. Véhicule automobile conforme à l'une quelconque des spécifications 1 à 11, **caractérisé par le fait que** la plateforme de chargement (3) peut être fixée dans la position de la plateforme inférieure et supérieure à l'aide d'un dispositif de blocage.

13. Véhicule automobile conforme à l'une quelconque des spécifications 1 à 12, **caractérisé par le fait qu'**au moins un des leviers (7) est soumis à une tension de ressort pour surmonter une position de point mort des leviers (7) et/ou pour déplacer les leviers (7) dans une position de fin de course.

14. Véhicule automobile conforme à l'une quelconque des spécifications 1 à 13, **caractérisé par le fait que** les leviers (7) sont conçus sous forme de plaques tournantes (27) ou de leviers pivotants (29).
